# EUROPÄISCHE PATENTSCHRIFT

(11) **EP 1 369 326 B1**
(45) Veröffentlichungstag und Bekanntmachung des Hinweises auf die Patenterteilung: **03.10.2007**
(21) Anmeldenummer: 03010163.8
(22) Anmeldetag: 06.05.2003
(51) Int. Cl.: B60T 7/12, B60T 17/22

(54) **Verfahren zum Reinigen einer eine Bremsscheibe und Bremsbeläge umfassenden Betriebsbremse eines Fahrzeuges**
Method for cleaning a service brake of a vehicle comprising a brake disc and brake pads
Prcédé pour nettoyer le frein de service d'un véhicule comprenant une disque de frein

(30) Priorität: 05.06.2002 DE 10224971
(43) Veröffentlichungstag der Anmeldung: 10.12.2003
(73) Patentinhaber: Bayerische Motoren Werke Aktiengesellschaft, 80809 München (DE)
(72) Erfinder: Flechtner, Horst, 85748 Garching (DE)

(56) Entgegenhaltungen:
- DE-A- 10 035 179
- DE-A- 10 052 081
- DE-A- 10 111 076
- DE-A- 19 846 392
- DE-A- 19 947 903
- DE-C- 4 427 170

## Beschreibung

Die Erfindung betrifft ein Verfahren zum Reinigen einer eine Bremsscheibe und Bremsbeläge umfassenden Betriebsbremse eines Fahrzeugs gemäß dem Oberbegriff von Anspruch 1.

Bei längeren Fahrten auf regennassen oder winterlichen Fahrbahnen schlägt sich ein Wasserfilm auf den Bremsscheiben nieder, wenn die Betriebsbremse nicht regelmäßig betätigt wird. Dabei kann der Wasserfilm aus Salzwasser oder mit Straßenschmutz vermischtem Wasser bestehen. Während nasse Scheiben relativ schnell trockengebremst sind, dauert es etwas länger, bis die Salzbeläge entfernt sind, die z.B. auf nasser oder nur feuchter, gesalzener Straße im Folgeverkehr auftreten. Nur etwas Feuchtigkeit mit Salz ist längerfristig wesentlich kritischer für den Bremsenreibwert als nur "sauberes" Wasser.

Wird die verschmutzte Bremse betätigt, verstreicht zunächst wertvolle Zeit bis der Wasserfilm auf der Bremsscheibe abgebaut ist und sich optimale Reibverhältnisse einstellen. Dies bedeutet einen Bremswegverlust. Bei starker Nässe oder nach längerer Folgefahrt mit zusätzlichem Salz im Sprühnebel des vorderen Fahrzeuges wird der Fahrer daher unangenehm überrascht, wenn der Bremsdruck nicht zur erwarteten Verzögerung führt.

Aus der DE 198 46 392 A1 ist ein Verfahren zum Abtrocknen einer eine Bremsscheibe und Bremsbeläge umfassenden Betriebsbremse eines Fahrzeugs, bei der eine Information über einen Nässegrad erzeugt und abhängig von dieser Information eine automatische Abtrocknungsfunktion aktiviert wird, welche die Bremsbeläge an die Bremsscheiben derart anlegt, dass im wesentlichen keine merkliche Fahrzeugverzögerung eintritt, bekannt.

Erhöhter Bremsdruck führt bei nassen Scheiben relativ schnell, d.h. innerhalb weniger Sekunden zu deren Trocknung und anschließend zu unkomfortablen Sprüngen bei der Verzögerung. Besonders bei Salzbelägen auf der Bremsscheibe dauert es länger, bis der normal hohe Reibwert erreicht ist. Im Fall einer Notbremsung wird bis zum Zustand "Abtrocknen" oder "Sauberbremsen" wertvoller Bremsweg verschenkt. Die Verschlechterung der Reibwerte kann je nach vorausfahrendem Fahrzeug außerdem einseitig erfolgen und zu einem Schiefziehen des Fahrzeuges während einer Bremsung führen. Wenn sich das Fahrzeug im Grenzbereich der Reibwertausnutzung bewegt, kann eine asymmetrisch wirkende Bremsanlage zum Ausbrechen führen. Von besonderer Problematik ist dieser Effekt bei großen Bremsscheiben und bei einer gezielten Führung von Kühlluft auf die Bremsscheiben.

Zur Zeit ist in Serienfahrzeugen kein Verfahren bekannt, um reibwertmindernde Beläge auf den Bremsscheiben im ungebremsten Fahrbetrieb zu erkennen. Erst bei Bremsungen kann aus der gemessenen Verzögerung auf ein Summensignal aus Reibwert Bremse und Reibwert zwischen Reifen und Fahrbahn geschlossen werden. Jedoch wäre es nicht genügend zuverlässig, ausschließlich vom Ausgangssignal eines Regensensors auf nasse Bremsscheiben zu schließen. Ohne Erkennung des Belages kann es andererseits keine Abhilfemaßnahmen geben. Der Fahrer ist im Bedarfsfall auf seine Erfahrung angewiesen.

Aufgabe der vorliegenden Erfindung ist es, die Erkennung eines Belages auf der Bremsscheibe und damit die bedarfsgerechte Reinigung der Bremsanlage zuverlässig zu ermöglichen, so dass entsprechende Gegenmaßnahmen ergriffen werden können.

Diese Aufgabe wird erfindungsgemäß gelöst durch das Verfahren zum Reinigen einer eine Bremsscheibe und Bremsbeläge umfassenden Betriebsbremse eines Fahrzeugs nach Anspruch 1. Bevorzugte Ausführungsformen der Erfindung sind Gegenstand der Unteransprüche.

Die Erfindung bezieht sich auf das Erkennen der beiden wichtigsten reibwertmindernden Effekte bei der Radbremse: Nässe und Salzsprühnebel. Nach Erkennen der reibwertmindernden Effekte sind anschließende Polierbremsungen als Abhilfemaßnahmen möglich. Zum Erkennen wird eine Schichtdicke des Salzwasserfilms und eine Salzkonzentration des Salzwasserfilms erfasst. Bei dem erfindungsgemäßen Verfahren zum Reinigen einer eine Bremsscheibe und Bremsbeläge umfassenden Betriebsbremse eines Fahrzeugs, bei dem eine Information über einen Salzwasserfilm erzeugt und abhängig von dieser Information eine automatische Reinigungsfunktion aktiviert wird, welche die Bremsbeläge an die Bremsscheiben derart anlegt, dass im wesentlichen keine merkliche Fahrzeugverzögerung eintritt, wird zum Erkennen des Salzwasserfilms der Bremsscheibe eine Schichtdicke des Salzwasserfilms bevorzugt mit einem Schichtdickensensor erfasst und eine Salzkonzentration des Salzwasserfilms bevorzugt mit einem Konzentrationssensor erfasst.

Die Schichtdicke des Wasserfilms wird vorzugsweise mit einem kapazitiven Sensor erfasst, die Konzentration des Salzgehaltes des Wasserfilms wird vorzugsweise mit einem Leitfähigkeitssensor erfasst. Die Messung der Leitfähigkeit von Salzwasser ist z.B. von B. Ramsch in www.aquacare.de/meer/info/veroeff/lf1/lf1.htm beschrieben.

Insbesondere erfolgt die Messung der Schichtdicke des Wasserfilms durch den kapazitiven Sensor als Durchflussmessung in einem Bremsenkühlluftschacht. Der so erfasste Wert ist ein Maß für die Dicke des Wasserfilms auf der Bremsscheibe.

Um Elektrolyse in dem Wasserfilm zu vermeiden, durch die sich die Zersetzungsprodukte auf dem Sensor niederschlagen würden, arbeiten die Sensoren vorzugsweise mit Wechselspannung.

Ein Vorteil der Erfindung besteht darin, dass das Ansprechverhalten der Betriebsbremse bei Regenfahrten, Schneematsch oder nassen Fahrbahnen verbessert wird und damit sich die Bremswege verkürzen. Außerdem wird der Korrosion an Bremsanlagen entgegengewirkt. Ein weiterer Vorteil der Erfindung besteht darin, dass der Bremskomfort bei Nässe durch Vermeidung starker Reibwert- Reduzierung nasser Scheiben gesteigert wird. Ein weiterer Vorteil besteht darin, dass die Sicherheit durch Reduzierung des Bremsweges bei starker Nässe oder Gefahr eines Salzbelages auf der Bremsscheibe verbessert wird. Außerdem wird sowohl der Komfort als auch die Sicherheit dadurch verbessert, dass asymmetrisch wirkende Bremsen in Folge einseitiger Reibwert- Veränderung durch Wasser oder Salz verhindert werden.

Weitere Merkmale und Vorteile der Erfindung ergeben sich aus der folgenden Beschreibung eines Ausführungsbeispiels, bei der Bezug genommen wird auf die beigefügte Zeichnung.

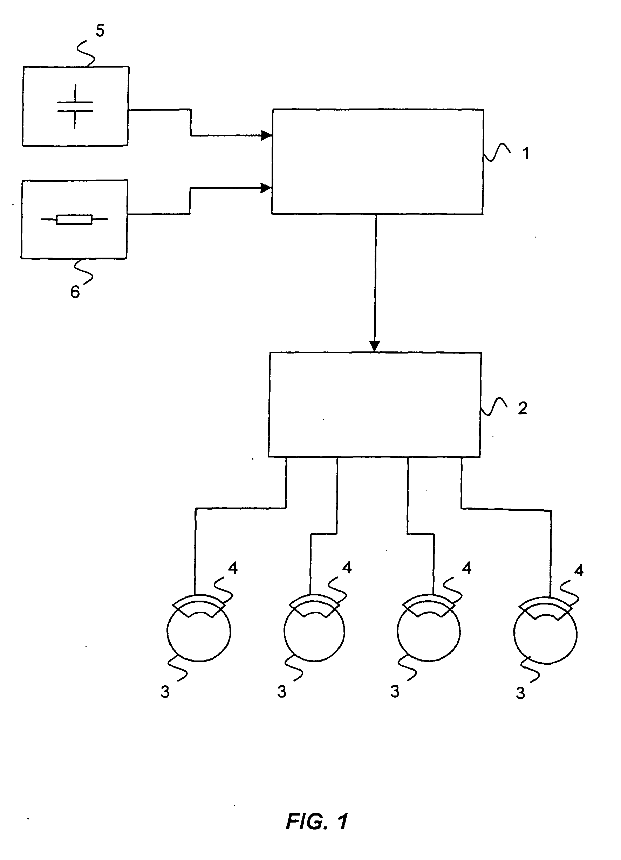

Fig. 1 zeigt eine Ausführungsform der Erfindung.

Ein Steuergerät 1 des Fahrzeugs empfängt Eingangssignale von (nicht dargestellten) Fahrzeugsensoren und steuert in Abhängigkeit von den Eingangssignalen u.a. einen Bremsregler 2 an. Beispiele für die Eingangssignale des Steuergerätes 1 sind Fahrzeuggeschwindigkeit und Außentemperatur. Der Bremsregler 2 beaufschlagt gegebenenfalls die im Fahrzeug vorhandenen, in Bremssätteln 4 angeordneten Bremsbeläge mit Fremdkraft, so dass sie auf eine Bremsscheibe 3 eine Reibungskraft ausüben.

Erfindungsgemäß umfasst das Fahrzeug insbesondere zwei Sensoren für die Beurteilung der Notwendigkeit einer zwischenzeitlichen Bremsbelag- / Bremsscheibenreinigung. Ein erster Sensor 5 dient der Erkennung der Schichtdicke eines Schmutzfilms auf der Bremsscheibe und auf den Bremsbelägen. Vorzugsweise ist dieser Sensor 5 ein kapazitiver Sensor, der vorzugsweise in einem Bremsenkühlluftschacht untergebracht ist und in Fig. 1 durch einen Kondensator symbolisiert ist.

Da insbesondere bei Salzwasser die Beeinträchtigung der Bremsanlage stark von der Konzentration des Salzes in dem Wasser abhängt, ist erfindungsgemäß außerdem ein zweiter Sensor 6 vorgesehen, der in der gezeigten Ausführungsform der Erfindung ein Leitfähigkeitssensor 6 ist. Der Leitfähigkeitssensor 6 ist in Fig. 1 durch ein Widerstandssymbol dargestellt.

Aufgrund der Daten von dem kapazitiven Sensor 5 und von dem Leitfähigkeitssensor 6 entscheidet das Steuergerät 1, ob die Reinigungsfunktion der Bremsanlage aktiviert werden soll. Natürlich können auch andere Fahrzeuginformationen in das Ausgangssignal des Steuergerätes 1 einfließen, durch die die Aktivierung der Reinigungsfunktion sowie die Häufigkeit der Betätigung der Bremsen bestimmt werden.

Entsprechend dem von den genannten Eingangsgrößen abhängigen Ausgangssignal des Steuergerätes 1 werden die Betriebsbremsen 4 des Fahrzeugs durch den Bremsregler 2 derart zyklisch mit Fremdkraft beaufschlagt, dass die Bremsbeläge in vorgegebenen zeitlichen Abständen leicht an die Bremsscheiben 3 angelegt werden. Dabei wird der Bremsdruck so eingestellt, dass noch keine (spürbare) Fahrzeuglängsverzögerung erfolgt. Die zeitlichen Abstände können von dem erkannten Verschmutzungsgrad der Bremsanlage abhängig gemacht werden.

Durch das zyklische Anlegen der Bremsbeläge an die Bremsscheiben 3 tritt ein Reinigungseffekt ein, so dass die die Bremswirkung beeinträchtigenden Schmutzfilme auf der Bremsanlage entfernt werden und damit auch bei Regenfahrten, Schneematsch oder nassen Fahrbahnen kürzest mögliche Bremswege sichergestellt sind und ein "Anbremsen" zur Beseitigung der Schmutzfilme vermieden wird.

Der Leitfähigkeitssensor 6 ist vorzugsweise aus zwei isoliert in eine Sensoroberfläche eingebrachten Elektroden aufgebaut. Die beiden Elektroden werden durch einen Wasserfilm darüber kurzgeschlossen, so dass ein durch sie fließender Strom einfach bestimmt werden kann. Mit dem Aufbau aus zwei isoliert in eine Sensoroberfläche eingebauten Elektroden ergibt sich ferner die Möglichkeit, den Sensor gleichzeitig oder alternierend (bei einer anderen Wechselspannungsfrequenz) als kapazitiven Sensor zu nutzen, so dass man mit einem Sensor beide Messaufgaben bewältigen kann, nämlich die Konzentration über den Widerstand und die Schichtdicke über die Kapazität zu bestimmen. Ist der Sensor trocken, ist der elektrische Widerstand sehr hoch und die gemessene Kapazität gering. Bei Nässe bleibt der Widerstand hoch und die Kapazität steigt stark mit der Wasserfilmdicke an. Eventuelle Verunreinigungen an der Oberfläche bleiben ohne Einfluss, da Wasser eine wesentlich höhere statische Dielektrizitätskonstante (ε etwa 80) als trockener Schmutz (ε etwa 5) hat. Wenn der Sensor mit Salz plus Feuchtigkeit beaufschlagt wird, ist dies an der stark erhöhten Leitfähigkeit und eventuell sogar einem Kurzschluss des Kondensators erkennbar. Bei trockener Fahrbahn trocknet der Sensor durch den Fahrtwind sehr schnell ab und liefert das ursprüngliche Ausgangssignal. Trockene Salzreste sind elektrisch kaum leitfähig und verhalten sich fast so wie normaler Schmutz.

Erfindungsgemäß werden der Schichtdickensensor 5 und der Konzentrationssensor 6 an einer günstigen Stelle eines (nicht dargestellten) Bremsenkühlluftschachtes der Bremsanlage angeordnet, so dass er am Messort wegen der Selbstreinigung direkt angeströmt wird und sich nicht in einem Windschatten befindet. Dabei ist zu beachten, dass die Feuchtigkeit zum größten Teil durch die Bremsenkühlluftschächte auf die vorderen Bremsscheiben 3 kommt. Die reibwertreduzierenden Verhältnisse an den hinteren Bremsscheiben 3 sind tendenziell ähnlich, wenn auch schwächer ausgeprägt. Die hinteren Bremsen sind für geringere Bremskräfte schwächer dimensioniert und besitzen keinen Bremsenkühlluftschacht. Die Verschmutzung ist bei den hinteren und den vorderen Bremsen gleich, so dass beispielsweise ein vorne aufgenommenes Signal auch repräsentativ auch für die hinteren Bremsen ist.

Die Erfassung der Schichtdicke des Wasserfilms und die Erfassung der Konzentration von Salz in dem Wasserfilm sind nicht auf die dargestellte Art beschränkt. In einer weiteren (nicht dargestellten) bevorzugten Ausführungsform wird eine Leitfähigkeitsmessung, die bis zum Kurzschluss führen kann, und eine parallele Auswertung eines zweiten Kondensators, dessen Kontaktflächen mit einem dünnen Isolator überzogen sind, kombiniert. Damit ist hier nur eine Kapazitätsauswertung möglich, da der schützende Kunststoff kaum leitfähig ist und vor Kurzschluss schützt. Dieser Teil erfasst in jedem Fall, auch bei Salzwasser, die Wassermenge, der andere Teil misst die Leitfähigkeit des Wassers bis zum Kurzschluss. Dazu sind zwei parallele Kondensatoranordnungen notwendig, die in die Oberfläche beispielsweise eines bereits vorhandenen Temperatursensors der Bremsanlage isoliert eingelassen werden.

Darüber hinaus ist die Erfassung der Schichtdicke und der Konzentration von Salz des Wasserfilms auch auf andere Arten möglich. Bei einer (nicht dargestellten) alternativen Ausführungsform der Erfindung wird zur Nässerkennung ein thermisches Messprinzip durchgeführt, bei dem mit einem ersten und einem zweiten Temperatursensor die Verdunstungskälte ermittelt wird. Da die Dynamik des Luft- Temperatursignals für eine Anzeige wichtig ist, muss hierbei ein Sensor geschützt liegen, d.h. der Einbauort muss in einem Windschatten liegen.

Bei einer weiteren (nicht dargestellten) alternativen Ausführungsform der Erfindung wird zur Nässeerkennung die Absorption elektromagnetischer oder akustischer (Ultraschall-) Wellen durch Wasser ermittelt, insbesondere durch einen Sensor, der in einem Bremsenkühlluftschacht angeordnet ist.

Darüber hinaus kann vor Aktivierung der Bremsanlage zum Reinigen das Nässesignal einer Plausibilitätsüberprüfung unterzogen werden. Die Plausibilisierung des Nässesignals kann über den Regensensor oder alternativ die Scheibenwischergeschwindigkeit inkl. Laufzeit in Verbindung mit der Fahrgeschwindigkeit erfolgen. Eine grobe Plausibilisierung für Salz kann in Verbindung mit der Außentemperatur vorgenommen werden, über ca. 10°C ist eine gesalzene Fahrbahn unwahrscheinlich, unter 0°C ist eine nasse Fahrbahn mit Sicherheit salzhaltig. Wenn dieser erweiterte Sensor nun über längere Zeit "Nässe" in einer noch zu bestimmenden Größenordnung registriert, ist davon auszugehen, dass die Bremsscheiben nass sind. Ein ähnlicher Schluss ist bei passenden Signalen in Richtung Salzbelag möglich. Über eine Beobachtung von Fahrgeschwindigkeit und Intensität der Signale ist eine grobe qualitative Auswertung zur Verschlechterung der Reibwertverhältnisse in der Bremsanlage möglich, wobei auf diese beschriebene Weise nicht nur eine Plausibilitätskontrolle durchgeführt werden kann, sondern grundsätzlich die besagte Schichtdicke und/oder die besagte Salzkonzentration des Salzwasserfilms zumindest grob ermittelt werden kann.

Zurückkommend auf das geschilderte Ausführungsbeispiel können, sobald durch das Steuergerät 1 erkannt wurde, dass sich die Reibwertverhältnisse an der Bremse stark verschlechtert haben, durch eine gezielte Polierbremsung über einige Sekunden mit niedrigem Druck und sehr geringer Bremskraft die Bremsscheiben gereinigt werden. Dadurch wird der Schmutzfilm auf der Bremsanlage durch das "sanfte" Anlegen der Bremsbeläge beseitigt, ohne dass die Bremsscheibe gezielt aufgeheizt wird. Vorteilhaft wird der Bremsvorgang während einer Beschleunigungsphase, während eines Lastwechsels im Schubbetrieb oder beim Befahren eines Gefälles mit Schleppmoment durchgeführt. Da diese Polierbremsungen ruckfrei erfolgen sollen, können sie bei Bedarf durch ein geringes Anheben des angeforderten Motormomentes kompensiert werden. Die Bremskraft ist dabei so gering, dass keine Gierbewegungen verursacht werden.

Die Polierbremsungen müssen nur dann durchgeführt werden, wenn in einem gegebenen Zeitintervall, dessen Länge von Reibwert verändernden Parametern abhängig sein kann, davor keine durch den Fahrer oder ein Regelsystem veranlasste Betriebsbremsung stattgefunden hat. Wenn von dem Steuergerät 1 festgestellt wird, dass die Reibwerte der einzelnen Radbremsen asymmetrisch abweichen, kann die Anzahl, Dauer und Stärke der Polierbremsungen angepasst werden.

Die Erfindung ist nicht auf zwei eigens eingebaute Sensoren beschränkt, sondern kann auch mit bereits vorhandenen Signalen realisiert werden. So kann die Nässe und damit die Filmdicke des Wassers auf der Bremsanlage "virtuell" auch aus der Aktivierung des Scheibenwischers und seiner Wischrate oder aus dem Ausgangssignal eines Regensensors abgeleitet werden, insbesondere unter Einbeziehung der Geschwindigkeit des Fahrzeugs. Diese Ausführungsform wäre besonders kostengünstig in der Herstellung.

In der obigen Beschreibung wurde Bezug genommen auf einen Salzwasserfilm auf der Bremsanlage. Selbstverständlich ist unter Salzwasserfilm jede Salzschicht mit beliebigem Feuchtigkeitsgrad zu verstehen.

## Patentansprüche

1. Verfahren zum Reinigen einer eine Bremsscheibe und Bremsbeläge umfassenden Betriebsbremse eines Fahrzeugs, bei dem eine Information über einen Salzwasserfilm erzeugt und abhängig von dieser Information eine automatische Reinigungsfunktion aktiviert wird, welche die Bremsbeläge an die Bremsscheiben derart anlegt, dass im wesentlichen keine merkliche Fahrzeugverzögerung eintritt,
**dadurch gekennzeichnet, dass**
zum Erkennen des Salzwasserfilms der Bremsscheibe eine Schichtdicke des Salzwasserfilms ermittelt und eine Salzkonzentration des Salzwasserfilms ermittelt wird.

2. Verfahren nach Anspruch 1,
**dadurch gekennzeichnet, dass**
die Schichtdicke des Salzwasserfilms mit einem Schichtdickensensor und die Salzkonzentration des Salzwasserfilms mit einem Konzentrationssensor erfasst wird.

3. Verfahren nach Anspruch 2
**dadurch gekennzeichnet, dass**
der Konzentrationssensor ein Leitfähigkeitssensor (6) ist und der Schichtdickensensor ein kapazitiver Sensor (5) ist.

4. Verfahren nach Anspruch 3,
**dadurch gekennzeichnet, dass**
der Leitfähigkeitssensor (6) zwei isoliert in eine Sensoroberfläche eingebrachte Elektroden umfasst.

5. Verfahren nach Anspruch 4,
**dadurch gekennzeichnet, dass**
der Leitfähigkeitssensor (6) außerdem als kapazitiver Sensor verwendet wird.

6. Verfahren nach einem der Ansprüche 3 bis 5,
**dadurch gekennzeichnet, dass**
der Leitfähigkeitssensor (6) und/oder der kapazitive Sensor (5) mit einer Wechselspannung betrieben wird.

7. Verfahren nach einem der vorangehenden Ansprüche,
**dadurch gekennzeichnet, dass**
der Leitfähigkeitssensor (6) und/oder der kapazitive Sensor (5) in einem Bremsenkühlluftschacht angeordnet ist/sind.

8. Verfahren nach einem der vorangehenden Ansprüche,
**dadurch gekennzeichnet, dass**
die Schichtdicke des Salzwasserfilms aus der Aktivierung des Scheibenwischers und seiner Wischrate oder aus dem Ausgangssignal eines Regensensors insbesondere unter Einbeziehung der Geschwindigkeit des Fahrzeugs abgeleitet wird.

## Claims

1. A method for cleaning a service brake of a vehicle comprising a brake disc and brake linings, in which information about a salt water film is generated and, depending on this information, an automatic cleaning function is activated, which applies the brake linings to the brake discs in such a way that substantially no noticeable vehicle deceleration occurs, **characterised in that** to detect the salt water film of the brake disc, a layer thickness of the salt water film is determined and a salt concentration of the salt water film is determined.

2. A method according to claim 1, **characterised in that** the layer thickness of the salt water film is detected with a layer thickness sensor and the salt concentration of the salt water film is detected with a concentration sensor.

3. A method according to claim 2, **characterised in that** the concentration sensor is a conductivity sensor (6) and the layer thickness sensor is a capacitive sensor (5).

4. A method according to claim 3, **characterised in that** the conductivity sensor (6) comprises two electrodes introduced in an insulated manner into a sensor surface.

5. A method according to claim 4, **characterised in that** the conductivity sensor (6) is also used as a capacitive sensor.

6. A method according to any one of claims 3 to 5, **characterised in that** the conductivity sensor (6) and/or the capacitive sensor (5) is operated with an alternating voltage.

7. A method according to any one of the preceding claims, **characterised in that** the conductivity sensor (6) and/or the capacitive sensor (5) is/are arranged in a brake cooling air shaft.

8. A method according to any one of the preceding claims, **characterised in that** the layer thickness of the salt water film is derived from the activation of the windscreen wiper and its wiping rate or from the output signal of a rain sensor more especially including the speed of the vehicle.

## Revendications

1. Procédé de nettoyage d'un frein de service de véhicule comprenant un disque de frein avec des garnitures de frein, selon lequel on génère une information concernant le film d'eau salée et en fonction de cette information on active automatiquement une fonction de nettoyage qui applique les garnitures de frein contre les disques de frein pour ne produire pratiquement pas de décélération significative du véhicule,
**caractérisé en ce que**
pour reconnaître le film d'eau salée sur les disques de frein on détermine une épaisseur de couche du film d'eau salée dont on détermine la concentration en sel.

2. Procédé selon la revendication 1,
**caractérisé en ce qu'**
on saisit l'épaisseur de la couche du film d'eau salée à l'aide d'un capteur d'épaisseur de couche et sa concentration en sel par un capteur de concentration.

3. Procédé selon la revendication 2,
**caractérisé en ce que**
le capteur de concentration est un capteur de conductibilité (6) et le capteur d'épaisseur de couche est un capteur capacitif (5).

4. Procédé selon la revendication 3,
**caractérisé en ce que**
le capteur de conductibilité (6) comprend deux électrodes intégrées de manière isolée dans une surface de capteur.

5. Procédé selon la revendication 4,
**caractérisé en ce que**
le capteur de conductibilité (6) est en outre utilisé comme capteur capacitif.

6. Procédé selon l'une des revendications 3 à 5,
**caractérisé en ce que**
le capteur de conductibilité (6) et/ou le capteur capacitif (5) fonctionnent avec une tension alternative.

7. Procédé selon l'une des revendications précédentes,
**caractérisé en ce que**
le capteur de conductibilité (6) et/ou le capteur capacitif (5) sont installés dans le canal d'air de refroidissement des freins.

8. Procédé selon l'une des revendications précédentes,
**caractérisé en ce qu'**
on détermine l'épaisseur de la couche du film d'eau salée de l'activation de l'essuie-glace et de sa vitesse d'essuyage ou du signal de sortie d'un capteur de pluie, notamment en tenant compte de la vitesse du véhicule.
